# EUROPEAN PATENT SPECIFICATION

(11) **EP 0 771 971 B1**
(45) Date of publication and mention of the grant of the patent: **21.06.2000**
(21) Application number: 96307394.5
(22) Date of filing: 10.10.1996
(51) Int. Cl.: F16H 19/00

(54) **Pivoting gear damper**
Schwenkender Getriebedämpfer
Amortisseur pivotant à engrenage

(30) Priority: 30.10.1995 US 550380
(43) Date of publication of application: 07.05.1997
(73) Proprietor: ILLINOIS TOOL WORKS INC., Glenview, Illinois 60025 (US)
(72) Inventor: Parker, Eric G., Elgin, Illinois 60123 (US); Bivens, Steven L., Kankakee, Illinois 60901 (US)
(74) Representative: Gordon, Michael Vincent

(56) References cited:
- GB-A- 2 286 869
- JP-A- 8 093 312
- US-A- 4 660 881
- PATENT ABSTRACTS OF JAPAN vol. 013, no. 593 (M-914), 27 December 1989 & JP 01 250571 A (KOKUSAN KINZOKU KOGYO CO LTD), 5 October 1989,
- PATENT ABSTRACTS OF JAPAN vol. 018, no. 144 (E-1521), 10 March 1994 & JP 05 327234 A (NIFCO INC), 10 December 1993,

## Description

The present invention relates generally to dampening the opening of an openable object such as an ashtray, cupholder, glove compartment door, or the like relative to a main body.

It is generally known in the art that a damper can be incorporated as a mechanism for controlling the opening and closing of doors and drawers in order to absorb the shock imparted by an external force. For example, when the openable object is a glove compartment door installed in a dashboard of an automotive vehicle, unrestrained opening of the door would allow the door to come to the limit of its movement with a sudden impact, which may cause the contents of the glove compartment to be tossed or scattered all over a passenger, seat and floor of the vehicle. In order to avoid this type of problem, there has been provided in the prior art different types of dampers for avoiding such sudden impacts.

One type of prior art damper is a rotary oil-type damper which typically includes a stationary housing and a rotor having a wheel gear. The wheel gear is generally adapted for mesh engagement with a gear rack fixed to a portion of the openable object (glove compartment door). The stationary housing is adapted to be attached to the main body (glove compartment housing). One problem experienced is that of ratcheting or gear skipping where the gear rack separates away from the wheel gear. Further, such a rotary damper dampens in both directions.

Another type of prior art damper device is a linear air damper which is a one-way damper but has the drawbacks of being formed of a large number of components and also requiring a large amount of space.

It is known from US-A-4 660 881 a gear damper, according to the preamble of claim 1, hereinafter referred to as a gear damper of the kind defined, to comprise toothed gear rack means movable between a first direction and a second direction, bracket means having a toothed driven gear disposed thereon for meshing engagement with said toothed gear rack means, and rotary damper means dampening said toothed driven gear.

The object of the present invention is to provide an improved gear damper having a one-way dampening effect which is relatively simple and economical to manufacture and assemble, but helps to overcome at least some of the disadvantages of the prior art dampening devices by being more compact to eliminate the space constraints encountered by the prior art dampening devices and/or by being self-aligning to eliminate the ratcheting and gear skipping problems of the prior art dampening devices.

According to the present invention, a gear damper of the kind defined is characterised in that said bracket means is pivotally mounted, and actuating means causing a one-way dampening is disposed on said pivotal bracket means for causing said toothed gear rack means to be in meshed engagement with said toothed driven gear to produce a dampened motion of said toothed gear rack means in the first direction, and for causing said toothed gear rack means to be disengaged from said toothed driven gear to allow unrestricted motion of said toothed gear rack means in the second direction.

Preferably, said actuating means comprises a guide pin and a cam member, said guide pin has an arcuate bottom surface and said cam member has a convex top surface.

Also preferably, said guide pin and said cam member have first ends thereof connected to said pivotal bracket means and have second ends thereof connected to one another by a bridge part to define an opening with said toothed gear rack means extending through said opening.

Preferably, said pivotal bracket means has a generally quadrilateral configuration, includes a pivot aperture and is moulded of a plastics material, with said toothed gear rack means being made of a soft plastics material.

An embodiment of the present invention is shown in the accompanying drawings, wherein:-
Figure 1 is a side elevational view of a gear damper of the present invention, illustrating movement of the gear rack in a left-to-right direction;
Figure 2 is a side elevational view similar to Figure 1, but illustrating movement of the gear rack in a right-to-left direction;
Figure 3 is a perspective view of the gear damper with the gear rack removed; and
Figure 4 is a cross-sectional view, taken along the line 4-4 of Figure 1.

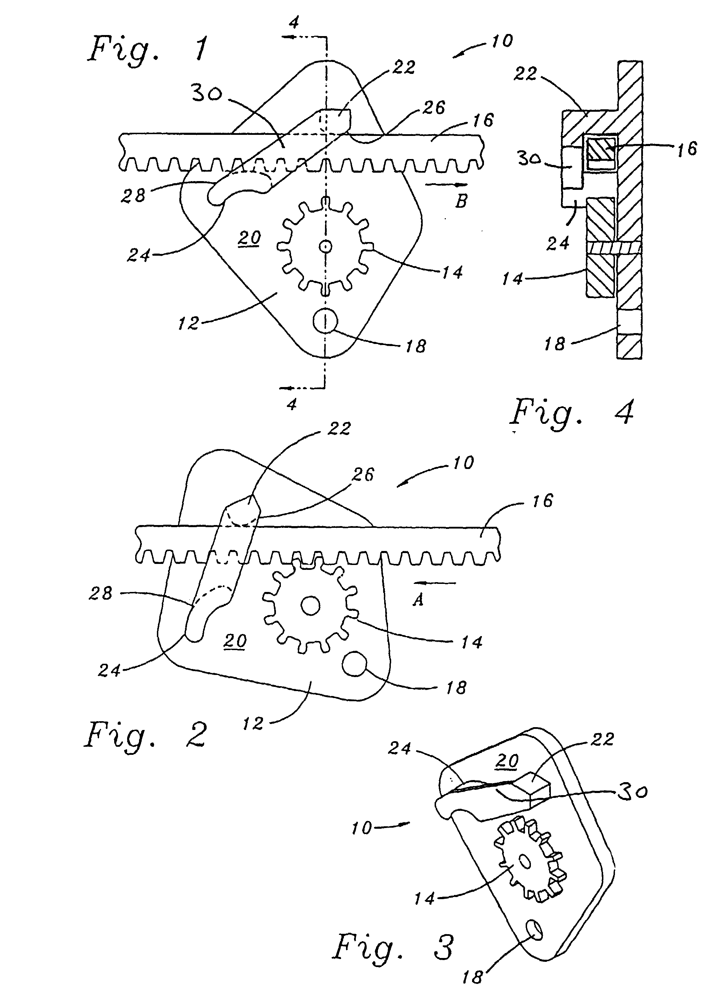

Referring now in detail to the drawings, there is shown in Figures 1 and 2 a gear damper 10 constructed in accordance with the principles of the present invention.

The gear damper 10 includes actuating means for causing an openable object such as a glove compartment door to be gently or smoothly opened at a dampened or controlled rate of speed in a first direction and to be closed at an undampened rate of speed in a second direction.

The gear damper 10 is comprised of a pivotable bracket 12 or support means having a toothed driven gear 14 of a rotary damper mounted thereon and a gear rack 16. When the openable object is a glove compartment door, one end of the gear rack 16 is fixedly attached to a wall of the glove compartment door. The pivotal bracket 12 is pivotally attached at a pivot point such as aperture 18 to a stationary wall on the side of the glove compartment which is mounted in a dashboard of an automotive vehicle (not shown). It should be understood to those skilled in the art that the gear rack 16 may be alternatively mounted to the stationary wall of the glove compartment while the pivotal bracket 12 is mounted to the wall of the glove compartment door.

The pivotal bracket 12 is moulded from a plastics or other suitable material and has a generally quadrilateral configuration. The pivotal bracket 12 includes a flat top surface 20 which has attached thereto the toothed driven gear 14. Also, there is provided on the top surface 20 both a guide pin 22 and a cam member 24. While the gear rack 16 is shown to be substantially straight, it should be understood to those skilled in the art that the gear rack 16 can be formed of a flexible material so as to be wound and unwound in a spiral configuration, thereby occupying a smaller amount of space. Thus, the gear rack 16 is preferably formed of a relatively soft plastics material or the like.

It should be noted that the construction of the rotary damper does not form any part of the present invention and may be formed of a conventional nature similar to the type shown in US-A-4691811 because the present invention merely utilizes and co-operates with the toothed driven gear of said rotary damper.

As can best be seen from Figures 3 and 4, the guide pin 22 is formed integrally with and protrudes from the top surface 20 of the pivotal bracket 12. Further, the guide pin 22 is of a generally rectangular construction and includes an arcuate bottom surface 26. The cam member 24 is of an arcuate-shaped configuration and includes a convex top surface 28. The cam member 24 is also formed integrally with and protrudes from the top surface 20 of the pivotal bracket 12. It can be seen that the guide pin 22 is provided adjacent the upper end of the pivotal bracket 12 and that the pivot aperture 18 is formed adjacent the opposite lower end of the pivotal bracket 12. Further, the cam member 24 is formed adjacent the left side of the pivotal bracket 12.

The free ends of the guide pin 22 and the cam member 24 are shown connected together by a bridge part 30. The bridge part 30 can be integrally moulded with the guide pin 22 and the cam member 24 or can be subsequently attached thereto. The bridge part 30 acts to keep the gear rack 16 in a desired location against the top surface 20 of the pivotal bracket 12.

The operation of the gear damper 10 will now be explained in detail with reference to Figures 1 and 2.

As shown in Figure 2, it is assumed that the glove compartment door is attached to the distal left end of the gear rack 16 and is in the closed position. When the glove compartment door is activated (opened), this causes the gear rack 16 to be moved from right to left in the first direction of arrow A. As a result, the pivotal bracket 12 will be rotated counter-clockwise about the pivot point 18 so as to cause the guide pin 22 to rotate downwardly. The arcuate bottom surface 26 of the guide pin 22 will force the toothed side of the gear rack 16 to be in meshed engagement with the toothed driven gear 14. Consequently, upon opening of the glove compartment door a braking force will be applied as the toothed gear 14 rolls smoothly on the gear rack 16 so as to open the glove compartment door gently at a dampened or controlled rate of speed.

As shown in Figure 1, it is assumed that the glove compartment door is attached again to the distal left end of the gear rack 16 and is in the opened position. When the glove compartment door is closed, this causes the gear rack 16 to be moved from left to right in the second direction of arrow B. As a result, the pivotal bracket 12 will be rotated clockwise about the pivot point 18 so as to cause the cam member 24 to rotate upwardly. The convex top surface 28 of the cam member will force the toothed side of the gear rack 16 to be disengaged from the toothed driven gear 14. More specifically, the gear rack 16 will become sandwiched between the arcuate bottom surface 26 of the guide pin 22 and the convex top surface 28 of the cam member 24 so as to maintain the toothed side of the gear rack 16 disengaged from the driven gear 14. Consequently, upon closing of the glove compartment door, no braking force will be applied since the gear rack 16 has been disengaged from the toothed gear 14 so as to close the same at an undampened rate of speed (unrestricted motion).

Accordingly, the pivotal bracket 12 having the pivot point 18, the guide pin 22 and the cam member 24 function together as actuating means and co-operate with the gear rack 16 so as to cause the glove compartment door to be opened at a dampened rate in the first direction and to be closed at an undampened rate in the second direction.

The gear damper 10 of the present invention is more compact than those which are traditionally available, thereby eliminating space constraints encountered by the prior art dampening devices, and further, the toothed gear rack 16 is self-aligned with the toothed driven gear 14, thus eliminating any ratcheting and gear skipping problems.

## Claims

1. A gear damper (10) comprising toothed gear rack means (16) movable between a first direction (A) and a second direction (B), bracket means (12) having a toothed driven gear (14) disposed thereon for meshing engagement with said toothed gear rack means (16), and rotary damper means dampening said toothed driven gear (14);
characterised in that said bracket means (12) is pivotally mounted, and actuating means (22, 24) causing a one-way dampening is disposed on said pivotal bracket means (12) for causing said toothed gear rack means (16) to be in meshed engagement with said toothed driven gear (14) to produce a dampened motion of said toothed gear rack means (16) in the first direction (A), and for causing said toothed gear rack means (16) to be disengaged from said toothed driven gear (14) to allow unrestricted motion of said toothed gear rack means (16) in the second direction (B).

2. A gear damper according to claim 1, characterised in that said actuating means comprises a guide pin (22) and a cam member (24).

3. A gear damper according to claim 2, characterised in that said guide pin (22) has an arcuate bottom surface (26).

4. A gear damper according to claim 2 or claim 3, characterised in that said cam member (24) has a convex top surface (28).

5. A gear damper according to any one of claims 2 to 4, characterised in that said guide pin (22) and said cam member (24) have first ends thereof connected to said pivotal bracket means (12) and have second ends thereof connected to one another by a bridge part (30) to define an opening with said toothed gear rack means (16) extending through said opening.

6. A gear damper according to any preceding claim, characterised in that said toothed gear rack means (16) is made of a soft plastics material.

7. A gear damper according to any preceding claim, characterised in that said pivotal bracket means (12) has a generally quadrilateral configuration.

8. A gear damper according to any preceding claim, characterised in that said pivotal bracket means (12) includes a pivot aperture (18).

9. A gear damper according to any preceding claim, characterised in that said pivotal bracket means (12) is moulded of a plastics material.

## Patentansprüche

1. Zahnraddämpfer (10) mit einer in eine erste Richtung (A) und eine zweite Richtung (B) beweglichen Zahnstangeneinrichtung (16) , einer Klammereinrichtung (12) mit einem Antriebszahnrad (14), das auf dieser zum kämmenden Eingriff mit der Zahnstangeneinrichtung (16) angeordnet ist, und mit einer Rotationsdämpfungseinrichtung, welche das Antriebszahnrad (14) dämpft,
dadurch gekennzeichnet, daß die Klammereinrichtung (12) drehbar befestigt ist und die Befestigungseinrichtung (22, 24) zur Erzeugung einer in einer Richtung laufenden Dämpfung, an der drehbaren Klammereinrichtung (12) angeordnet ist, um die Zahnstangeneinrichtung (16) in kämmenden Eingriff mit dem Antriebszahnrad (14) zu bringen, damit eine gedämpfte Bewegung der Zahnstangeneinrichtung (16) in der ersten Richtung (A) bewirkt wird, und um die Zahnstangeneinrichtung (16) nicht in Eingriff mit dem Antriebszahnrad (14) zu bringen, damit eine unbehinderte Bewegung der Zahnstangeneinrichtung (16) in der zweiten Richtung (B) ermöglicht wird.

2. Zahnraddämpfer nach Anspruch 1, dadurch gekennzeichnet, daß die Stelleinrichtung einen Führungsstift (22) und ein Nockenelement (24) aufweist.

3. Zahnraddämpfer nach Anspruch 2, dadurch gekennzeichnet, daß der Führungsstift (22) eine gebogene Unterseite (26) aufweist.

4. Zahnraddämpfer nach Anspruch 2 oder 3, dadurch gekennzeichnet, daß das Anschlagelement (24) eine konvexe Oberseite (28) aufweist.

5. Zahnraddämpfer nach einem der Ansprüche 2 bis 4, dadurch gekennzeichnet, daß der Führungsstift (22) und das Anschlagelement (24) jeweils erste Enden, die an der drehbaren Klammereinrichtung (12) befestigt sind, und jeweils zweite Enden, die miteinander durch ein Brückenelement (30) verbunden sind, besitzen, um eine Öffnung zu bilden, durch die die Zahnstangeneinrichtung (16) sich erstreckt.

6. Zahnraddämpfer nach einem der vorangehenden Ansprüche, dadurch gekennzeichnet, daß die Zahnstangeneinrichtung (16) aus einem weichen Kunststoffmaterial besteht.

7. Zahnraddämpfer nach einem der vorangehenden Ansprüche, dadurch gekennzeichnet, daß die drehbare Backeneinrichtung (12) einen im wesentlichen vierseitigen Aufbau besitzt.

8. Zahnraddämpfer nach einem der vorangehenden Ansprüche, dadurch gekennzeichnet, daß die drehbare Klammereinrichtung (12) eine Zapfenöffnung (18) aufweist.

9. Zahnraddämpfer nach einem der vorangehenden Ansprüche, dadurch gekennzeichnet, daß die drehbare Klammereinrichtung (12) aus einem Kunststoffmaterial geformt ist.

## Revendications

1. Amortisseur à engrenage (10) comprenant un moyen de crémaillère à engrenage (16) adapté à un déplacement entre une première direction (A) et une seconde direction (B), un moyen de console (12) comportant un engrenage mené (14) disposé sur lui pour être en prise avec ledit moyen de crémaillère à engrenage (16), et un moyen amortisseur rotatif amortissant ledit engrenage mené (14) ;
caractérisé en ce que ledit moyen de console (12) est monté de manière à pivoter, et un moyen d'actionnement (22, 24) produisant un amortissement unidirectionnel est disposé sur ledit moyen de console pivotant (12) pour amener ledit moyen de crémaillère à engrenage (16) à être en prise avec ledit engrenage mené (14) afin de produire un mouvement amorti dudit moyen de crémaillère à engrenage (16) dans la première direction (A), et pour amener ledit moyen de crémaillère à engrenage (16) à être dégagé dudit engrenage mené (14) afin de permettre un mouvement non restreint dudit engrenage mené (14) dans la seconde direction (B).

2. Amortisseur à engrenage selon la revendication 1, caractérisé en ce que ledit moyen d'actionnement comprend une tige de guidage (22) et un organe formant came (24).

3. Amortisseur à engrenage selon la revendication 2, caractérisé en ce que ladite tige de guidage (22) comporte une surface inférieure arquée (26).

4. Amortisseur à engrenage selon la revendication 2 ou la revendication 3, caractérisé en ce que ledit organe formant came (24) comporte une surface supérieure convexe (28).

5. Amortisseur à engrenage selon l'une quelconque des revendications 2 à 4, caractérisé en ce que ladite tige de guidage (22) et ledit organe formant came (24) ont des premières extrémités reliées audit moyen de console pivotant (12) et des secondes extrémités reliées l'une à l'autre par une partie formant pont (30) pour définir une ouverture avec ledit moyen de crémaillère à engrenage (16) s'étendant dans ladite ouverture.

6. Amortisseur à engrenage selon l'une quelconque des revendications précédentes, caractérisé en ce que ledit moyen de crémaillère à engrenage (16) est constitué d'une matière plastique souple.

7. Amortisseur à engrenage selon l'une quelconque des revendications précédentes, caractérisé en ce que ledit moyen de console pivotant (12) a généralement une configuration de quadrilatère.

8. Amortisseur à engrenage selon l'une quelconque des revendications précédentes, caractérisé en ce que ledit moyen de console pivotant (12) comprend une ouverture de pivot (18).

9. Amortisseur à engrenage selon l'une quelconque des revendications précédentes, caractérisé en ce que ledit moyen de console pivotant (12) est constitué d'une matière plastique moulée.
